# EUROPEAN PATENT APPLICATION

(11) **EP 4 703 972 A1**
(43) Date of publication of application: **04.03.2026**
(21) Application number: 24196424.6
(22) Date of filing: 26.08.2024
(51) Int. Cl.: G06N 3/0475, G06N 5/025, G06N 5/04

(54) **A DEVICE AND A COMPUTER IMPLEMENTED METHOD FOR DETERMINING RULES FOR DETERMINING AN ANSWER TO A QUESTION**

(71) Applicant: Robert Bosch GmbH, 70442 Stuttgart (DE)
(72) Inventor: Higuera, Nelson, 1050 Wien (AT); Oetsch, Johannes, 1190 Wien (AT); Eiter, Thomas, 1040 Wien (AT)

(57) **Abstract**

A device and a computer implemented method for determining rules for determining an answer to a question about content, in particular content representing a digital image, a time series, for example of sensor data, audio, synthetic data, or data that can be represented as objects and their relations, by automated reasoning on the question, and the content, wherein the method comprises providing (202) a set of rules for determining the answer to the question, providing (208) the question, and the answer, and the content, determining (204) a preprompt for a large language model explaining the set of rules, determining (210) a prompt for the large language model instructing the large language model to add at least one rule to the set of rules such that the answer to the question about the content is derivable by automated reasoning on the question, and the content, and the set of rules including the at least one rule, prompting (206) the large language model with the preprompt, prompting (212) the large language model with the prompt, receiving (214) a response of the large language model to the prompt, wherein the response comprises the at least one rule.

## Description

### Background

The invention relates to a device and a computer implemented method for determining rules for determining an answer to a question.

Adam Ishay, Zhun Yang, and Joohyung Lee. Leveraging large language models to generate answer set programs. In Proceedings of the 20th International Conference on Principles of Knowledge Representation and Reasoning, KR2023, Rhodes, Greece, September 2-8, 2023, pages 374-383, 2023 discloses a method to use a large language model (LLM) to translate a problem specification in natural language into rules so that the problem can be solved by passing the rules to a suitable symbolic reasoning engine.

### Disclosure of the invention

A computer implemented method for determining rules for determining an answer to a question about content, in particular content representing a digital image, a time series, for example of sensor data, audio, synthetic data, or data that can be represented as objects and their relations, by automated reasoning on the question, and the content, wherein the method comprises providing a set of rules for determining the answer to the question, providing the question, and the answer, and the content, determining a preprompt for a large language model explaining the set of rules, determining a prompt for the large language model instructing the large language model to add at least one rule to the set of rules such that the answer to the question about the content is derivable by automated reasoning on the question, and the content, and the set of rules including the at least one rule, prompting the large language model with the preprompt, prompting the large language model with the prompt, receiving a response of the large language model to the prompt, wherein the response comprises the at least one rule. The set of rules represents a theory for question answering. The question, and the answer, and the content are an example for a triple that is used to extract at least one new rule for the theory.

The method may comprise providing a syntax of the a that is used for the at least one rule, prompting the large language model to determine the at least one rule in accordance with the syntax, checking whether the at least one rule is in accordance with the syntax of the at least one rule, and adding the at least one rule to the set of rules if the at least one rule is in accordance with the syntax of the at least one rule, or not adding the at least one rule to the set of rules otherwise. Prompting the large language model to determine the at least one rule in accordance with the syntax guides the large language model to determine the at least one new rule in the syntax and accepts or rejects the at least one new rule based on the syntax. Adding the at least one rule to the set of rules if the at least one rule is in accordance with the syntax avoids that the set of rules is amended by a rule that is not in accordance with the syntax.

The method may comprise automated reasoning on the question, and the content, and the set of rules including the at least one rule to determine an answer, and adding the at least one rule to the set of rules if the answers match, or not adding the at least one rule to the set of rules otherwise. Adding the at least one rule to the set of rules if the answers match avoids that the set of rules is amended by a rule that results in an answer of the automated reasoning that is incorrect.

The method may comprise providing a syntax of the language that is used for the question, in particular an answer set programming syntax, and prompting the large language model to process the question having the syntax of the language. Prompting the large language model to process the question having the syntax of the language model guides the large language model based on the syntax of the language that is used for the question.

The method may comprise providing an explanation of the representation of the question that is used for the representation of the question, and prompting the large language model to process the question in accordance with the explanation of the representation of the question. Prompting the large language model to process the question in accordance with the explanation of the representation of the question guides the large language model based on the explanation of the representation of the question.

The method may comprise providing an explanation of a representation of the content that is used for the representation of the content, and prompting the large language model to process the content in accordance with the explanation of the representation of the content. Prompting the large language model to process the content in accordance with the explanation of the representation of the content guides the large language model based on the explanation of the representation of the content.

That the representation of the content may comprise a scene graph. The scene graph represents for example the content of a scene in particular a scene in a digital image.

The method may comprise providing a syntax of the language that is used for the content, and prompting the large language model to process the content having the syntax of the language that is used for the content. Prompting the large language model to process the content having the syntax of the language that is used for the content guides the large language model based on the syntax of the language that is used for the content.

The method may comprise determining the preprompt for the set of rules comprising the at least one rule, prompting the large language model with the preprompt for the set of rules comprising the at least one rule, determining another prompt comprising a different answer, a different question and/or a different content, determining at least one other rule with the large language model for the other prompt. Prompting the large language model with the preprompt for the set of rules comprising the at least one rule provides an update of the set of rules to the large language model. Prompting the large language model with the other prompt and adding the at least one other rule to the set of rules incrementally extends the set of rules.

A device for determining rules for determining an answer to a question about content by automated reasoning on the question, and the content comprises at least one processor and at least one memory, wherein the at least one memory stores instructions that, when executed by the at least one processor, cause the device to execute the method.

A computer program that comprises computer readable instructions that, when executed by a computer, cause the computer to execute the method.

A datastructure for determining rules for determining an answer to a question about content by automated reasoning on the question, and the content, wherein the datastructure comprises at least one data field for a set of rules for determining the answer to the question, wherein the datastructure comprises at least one data field for the question, and the answer, and the content, wherein the datastructure comprises at least one data field for a preprompt for a large language model explaining the set of rules, wherein the datastructure comprises at least one data field for a prompt for the large language model instructing the large language model to add at least one rule to the set of rules such that the answer to the question about the content is derivable by automated reasoning on the question, and the content, and the set of rules including the at least one rule, wherein the datastructure comprises at least one data field for a response of the large language model to the prompt, received upon prompting the large language model with the preprompt, and prompting the large language model with the prompt, wherein the response comprises the at least one rule.

Further embodiments are derived from the following description and the drawing. In the drawing,
Fig. 1 schematically depicts a device for determining rules for determining an answer to a question about content by automated reasoning on the question, and the content,
Fig. 2 a flow chart comprising steps of a method for determining the rules,
Fig. 3 a flow chart comprising steps of an exemplary implementation of the method.

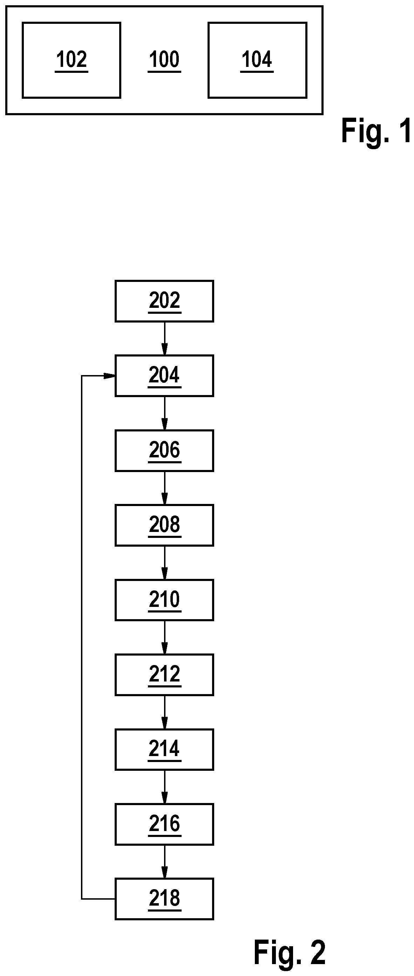

Figure 1 schematically depicts a device 100 for determining rules for determining an answer to a question about content by automated reasoning on the question, and the content.

The device 100 comprises at least one processor 102 and at least one memory 104. The at least one memory 104 stores instructions that, when executed by the at least one processor 102, cause the device 100 to execute a method for determining the rules.

Figure 2 depicts a flow chart comprising steps of the method.

The method is based on a large language model LLM.

LLMs exhibit a broad range of capabilities, making them highly versatile in various applications. At their core, they excel in understanding and generating human-like text, which enables them to perform tasks such as natural language understanding, translation, summarization, and creative content generation.

Ashish Vaswani, Noam Shazeer, Niki Parmar, Jakob Uszkoreit, Llion Jones, Aidan N Gomez, Lukasz Kaiser, and Illia Polosukhin. Attention is all you need. In Advances in Neural Information Processing Systems, volume 30. Curran Associates, Inc., 2017, discloses aspects of LLMs.

The method may use examples. The examples may be provided as a set of triples that comprises triples of a question, an answer, and a content.

The content may comprise a scene graph representation of a visual scene. The scene graph representation is particularly useful for solving visual question answering (VQA) tasks. The method is neither limited to VQA nor to the scene graph representation. The scene graph is an example for the content. The visual scene is an example for input data. The method may use other input data that can be translated into the content. The content comprises for example a fact-based symbolic representation of the input data.

The input data may comprise a digital image of a graph, a scalar time series, e.g. of sensor data, audio, synthetic data, data that can be represented as objects and their relations. The digital image may comprise a traffic scene, e.g., a scene comprising a traffic sign, a road surface, a pedestrian, a vehicle.

The method comprises a step 202.

The step 202 comprises providing a set of rules for determining the answer to the question.

The set of rules is for example provided in a syntax of a language that is used for the rules. The syntax of the language that is used for the rules is for example the answer set programming syntax of Answer-Set Programming (ASP).

The set of rules is for example an ASP program.

ASP is described for example in Gerhard Brewka, Thomas Eiter, and Miroslaw Truszczynski. Answer set programming at a glance. Commun. ACM, 54(12):92-103, 2011.

ASP is a declarative logic-based approach to combinatorial search and optimization with roots in knowledge representation and reasoning. It offers a simple modelling language and efficient solvers.1 In ASP, the search space and properties of problem solutions are described by means of a logic program such that its models, called answer sets, encode the problem solutions.

An ASP program is a set of rules of the form
*a*₁ |... | *aₘ* : - *b*₁*,* ... , *bₙ, not c*₁*,* ..., *not cₙ*
where all *aᵢ, bⱼ, cₖ* are first-order literals and not is default negation. The set of atoms left of : - is the head of the rule, while the atoms to the right form the body.

Whenever all *bⱼ* are true and there is no evidence for any *cₗ,* then at least some *aᵢ* must be true.

A rule with an empty body and a single head atom without variables is a fact and is always true. A rule with an empty head is a constraint and is used to exclude models that would satisfy the body.

ASP provides further language constructs like aggregates and weak (also called soft) constraints, whose violation should only be avoided. Francesco Calimeri, Wolfgang Faber, Martin Gebser, Giovambattista lanni, Roland Kaminski, Thomas Krennwallner, Nicola Leone, Marco Maratea, Francesco Ricca, and Torsten Schaub. Asp-core-2 input language format. Theory Pract. Log. Program., 20(2):294-309, 2020. discloses further aspects of the ASP language and its semantics.

The method comprises a step 204.

The step 204 comprises determining a preprompt for the LLM explaining the set of rules.

The set of rules represents a theory for question answering.

The step 204 may comprise providing a syntax of a language that is used for the question. The syntax of the language that is used for the question is for example the answer set programming syntax of the ASP.

The step 204 may comprise providing a syntax of a language that is used for the content. The syntax of the language that is used for the content is for example the answer set programming syntax of the ASP.

The step 204 may comprise providing an explanation of a representation of the content that is used for representing the content in the prompt. For example, a scene in a digital image comprises the content. For example, the representation comprises the scene graph of the scene, in particular in the answer set programming syntax of the ASP.

The step 204 may comprise providing a syntax of a language that is used for the at least one rule. The syntax of the language that is used for the at least one rule is for example the answer set programming syntax of the ASP.

The method comprises a step 206.

The step 206 comprises prompting the LLM with the preprompt.

The preprompt comprises the set of rules, i.e., the theory.

The step 206 may comprise prompting the LLM that the question has the syntax of the language that is used for the question. For example, the LLM is prompted that the question is provided in the answer set programming syntax of the ASP.

The step 206 may comprise prompting the LLM that the content has the syntax of the language that is used for the content. For example, the LLM is prompted that the content is provided in the answer set programming syntax of the ASP.

The step 206 may comprise prompting the LLM to process the content in accordance with the explanation of the representation of the content.

For example, the LLM is prompted that the representation comprises the scene graph of the scene. For example, the LLM is prompted with the explanation that the scene graph is in the answer set programming syntax of the ASP.

The step 206 may comprise prompting the LLM that the at least one rule shall have the syntax of the language that is used for the at least one rule. For example, the LLM is prompted that the at least one rule shall be provided in the answer set programming syntax of the ASP.

The respective syntax and/or the explanation may be provided to the LLM in the same preprompt as the set of rules. Different preprompts may be used for the set of rules and the respective syntax and/or explanation as well.

The method comprises a step 208.

The step 208 comprises providing the question, and the answer, and the content.

The question, and the answer, and the content may be provided from the examples, e.g., from one triple of the set of triples.

The method comprises a step 210.

The step 210 comprises determining a prompt for the LLM instructing the LLM to add at least one rule to the set of rules such that the answer to the question about the content is derivable by automated reasoning on the question, and the content, and the set of rules including the at least one rule.

The method comprises a step 212.

The step 212 comprises prompting the LLM with the prompt.

The step 212 may comprise prompting the LLM that the LLM will receive a plurality of prompts and to determine the at least one rule such that the answer to the question about the content of the plurality of prompts is derivable by automated reasoning on the question, and the content, and the set of rules including the at least one rule.

The method comprises a step 214.

The step 214 comprises receiving a response of the LLM to the prompt. In case, the LLM is provided with a plurality of prompts, the step 214 may comprise receiving the response of the LLM to the plurality of prompts. The response comprises the at least one rule.

The method may comprise a step 216.

The optional step 216 may comprise checking whether the at least one rule is in accordance with the syntax of the language that shall be used for the at least one rule.

The optional step 216 may comprise automated reasoning on the question, and the content, and the set of rules including the at least one rule to determine an answer of the automated reasoning.

The method may comprise adding the at least one rule to the set of rules in a step 218, if the at least one rule is in accordance with the syntax that shall be used for the at least one rule, or not adding the at least one rule to the set of rules otherwise.

The set of rules comprising the at least one rule represents a new theory for question answering.

The step 218 may comprise adding the at least one rule to the set of rules, if the answers match, or not adding the at least one rule to the set of rules otherwise.

To avoid that adding rules to the theory renders past examples incorrect, the method may use regression testing in iterations.

For example, in each iteration, the set of rules is saved. Whenever a further rule is received, a semantic check is performed not only on the current set of rules, but also on all the previously saved set of rules. The further rule is added to the latest set of rules, in case the semantic check is successfully performed on all sets of rules and not added to the latest set of rules otherwise. The semantic check is for example checking, whether the sets of rules are in accordance with the semantic of the ASP language.

Afterwards, the step 204 may be executed for the set of rules comprising the at least one rule.

This means, the preprompt comprises the set of rules comprising the at least one rule, i.e., the new theory. The LLM is prompted with the preprompt for the set of rules comprising the at least one rule. In step 208, the method comprises determining another prompt comprising a different answer, a different question and/or a different content than the previous prompt. This means, the method is used to determine at least one other rule with the LLM for the other prompt based on the new theory.

The method provides a declarative knowledge distillation, where the model that the method distills from is the LLM, and the knowledge that is distilled from is represented in ASP rules.

ASP is an example for a fact-based symbolic representation of the questions, the answers, the content. The questions that are used for determining the theory may come from a neural-network component that translates a natural language question into the fact-based symbolic representation. The answers that are used for determining the theory may come from a neural-network component that translates a natural language answers into the fact-based symbolic representation. The content that is used for determining the theory may come from a neural-network component that translates a natural language content and/or scene graph into the fact-based symbolic representation.

The content that is used for determining the theory may come from a neural-network component that translates the input data into the fact-based symbolic representation.

An exemplary prompt text after the preprompt comprises a question Q, a scene S, and an answer A in a tuple p=(Q; S;A) in the language of ASP.

The method may be started, in case the automated reasoning of an ASP solver on the tuple p and the current theory T, i.e., the current set of rules, recognizes that the current theory T cannot provide an answer to the tuple p.

In the method, the LLM is prompted with the tuple p to add rules such that the correct answer can be derived. The LLM for example outputs a response R comprising the at least one rule.

The method for example checks whether the response R is in correct ASP syntax by passing the at least one rule from the response R to the ASP solver for automated reasoning. If the ASP solver can process the at least one rule without a syntax error, the syntax is correct, and the at least one rule from the response R is concatenated with the initial theory, i.e., the current set of rules, to produce a result theory Tres, i.e., the new theory.

In the method, the semantic check may comprise running the result theory Tres alongside an instance pair (Q; S) of the question Q and the scene S to see whether the answer it produces is correct, i.e., coincides with the answer A. If this is the case, the method replaces the current theory T by the result theory Tres.

The method may comprise repeating these steps until all examples were presented.

When using the ASP language, the LLM receives instructions to produce ASP rules. Sometimes the LLM may not output ASP rules, because the response R can be corrupted by additional natural language comments or other artifacts. To handle this, the method comprises a number of retries r of prompting the LLM to provide the response R for the same tuple p to improve the chances of answering correctly. This means, the method comprises prompting the LLM r times with the same prompt. After r retries, the method may stop the retries and not add any rule to the set of rules for the tuple p.

A pseudocode of an exemplary algorithm for an exemplary implementation of steps of the method is provided below for a file initial theory.lp comprising an initial theory:
1: current example ← 0
2: max retries <- args:max_retries
3: strat <- args:strategy
4: k <- args:sample_sz
5: regression examples <- []
6:
7: pb <- PromptBuilder('GQA')
8: examples <- pb:generate_examples(strat; k)
9: learning_examples <- length of examples
10:
11: incumbent_theoryindex <- Read file './initial theory.lp'
12: initial_theory ← incumbent_theory
13: while current example_index < learning_examples do
14: if run asp code with incumbent_theory; current_example then
15: Update current example_index
16: continue
17: end if
18: retries ← 0
19: while retries < max_retries do
20: prompt ← formatted string with current_example
21: preprompt ← pb:generate_preprompt([incumbent_theory])
22: response ← ask LLM with prompt; preprompt
23: extended_theory ← incumbent_theory + response
24: if check asp syntax of extended_theory then
25: if run asp code with extended_theory; current example then
26: if run asp code with extended_theory; regression_examples then
27: regression_examples:append(current example)
28: incumbent_theory ← extended theory
29: break
30: end if
31: end if
32: end if
33: retries <- retries + 1
34: end while
35: Update current_example_index
36: end while

The function pb:generate_preprompt determines the preprompt as described above. The function pb:generate_examples samples k examples depending on a strategy strat.

Given examples comprising ASP question representations, the strategy strat may be based on a predicate count.

The examples are grouped by the number of predicate occurrences that appear in the ASP question representation. For example a dictionary is created depending on the examples, where the keys of the dictionary are the number of predicates and the contents of the dictionary are questions with a given length. The lengths may range, e.g., from 4 to 13.

Given examples comprising ASP question representations, the strategy strat may be based on predicate relevance.

The examples are grouped based on the predicates that appear in the ASP question representation. For example, a dictionary is created, where the keys of the dictionary are the predicates that appear in the ASP question representations.

Then the dictionary is populated with questions where the key predicate appears in the ASP question representation. For example, there are 22 different predicates that can appear in an ASP question representations.

The function pb:generate_examples samples the k examples for example from the groups created in the strategy strat. The strategy strat may be chosen by a user.

The examples may be processed in a batch processing of examples.

The respective prompts for the respective examples may be determined one by one. The respective prompts for the respective examples may be sent to the LLM for each example one by one.

This is useful to find the at least one rule that solves that particular example.

To general rules, that can handle a considerable portion of a dataset, the examples are sampled from the dataset.

Multiple prompts are sent to the LLM in a batch. Multiple batches may be sent to the LLM.

A batch may contain b examples resulting in b singular prompts. A singular prompt may comprise a plurality of questions q=(Q1, ..., Qb) for the same content or for one content per question. In this case, the LLM creates the at least one rule that is general enough to pass the semantic check for all the examples in the batch.

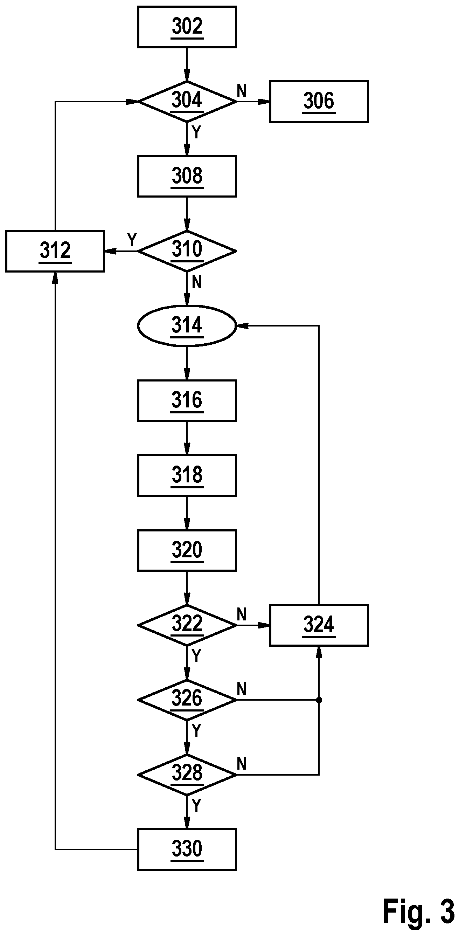

Figure 3 depicts a flow chart comprising steps of an exemplary implementation of the method.

In a step 302, examples, a current theory and a regression list are provided. The examples may be sampled from the dataset. The current theory may be initialized with a given initial theory. The theory may be the set of rules. The regression list may be empty or comprise further examples.

Afterwards, a step 304 is executed to check, whether the examples have been used, e.g., no examples are present, or whether unused examples are left, e.g., at least one example is left.

In case the examples are used, a step 306 is executed. Otherwise a step 308 is executed.

In the step 306, the theory is output.

In the step 308, a current example is sampled from the examples, a number of retries is set to 0 and a maximum number of retries is set to a given value M.

Afterwards a step 310 is executed to check, whether the current theory can answer the example. In case the current theory can answer the example, a step 312 is executed. Otherwise a step 314 is executed.

In the step 312, the sampled example is removed from the examples or marked as used example.

In the step 314, a check is performed to determine, if the number of retries is less than the maximum number of retries. In case the number of retries is less than the maximum number of retries, a step 316 is executed.

Otherwise the method may end.

The step 316 comprises constructing the prompt for the current example and the preprompt using the current theory.

Afterwards a step 318 is executed to obtain the response from the LLM by using the prompt and the preprompt.

Afterwards a step 320 is executed to determine an extended theory by amending the current theory with the response.

Afterwards a syntax check is executed in a step 322 to determine whether the extended theory has the correct syntax or not. In case the syntax check fails, a step 324 is executed. I case the syntax check determines that the extended theory has the correct syntax, a step 326 is executed.

In the step 324, the number or retries is incremented, e.g., by 1. Afterwards, the step 314 is executed.

In the step 326, a check is performed to determine whether the extended theory solves the current example. In case the extended theory solves the current example, a step 328 is executed. Otherwise the step 324 is executed.

In the step 328, a check is performed to determine whether the extended theory solves the examples in the regression list. In case the extended theory solves the examples in the regression list, a step 330 is executed. Otherwise the step 324 is executed.

The step 330 comprises replacing the current theory with the extended theory. The step 330 comprises adding the current example to the regression list.

Afterwards the step 312 is executed.

A datastructure may be provided for determining rules for determining an answer to a question about content by automated reasoning on the question, and the content.

The datastructure comprises at least one data field for
- a set of rules for determining the answer to the question,
- the question, and the answer, and the content,
- a preprompt for a large language model explaining the set of rules,
- a prompt for the large language model instructing the large language model to add at least one rule to the set of rules such that the answer to the question about the content is derivable by automated reasoning on the question, and the content, and the set of rules including the at least one rule,
- a response of the large language model to the prompt, received upon prompting the large language model with the preprompt, and prompting the large language model with the prompt, wherein the response comprises the at least one rule.

The datastructure may comprise at least one datafield for
- a syntax of a language that is used for the at least one rule,
- a syntax of the language that is used for the question, in particular an answer set programming syntax,
- an explanation of the representation of the question that is used for the representation of the question,
- an explanation of a representation of the content that is used for the representation of the content,
- a syntax of the language that is used for the content,
- another prompt comprising a different answer, a different question and/or a different content.

## Claims

1. A computer implemented method for determining rules for determining an answer to a question about content, in particular content representing a digital image, a time series, for example of sensor data, audio, synthetic data, or data that can be represented as objects and their relations, by automated reasoning on the question, and the content, **characterized in that** the method comprises providing (202) a set of rules for determining the answer to the question, providing (208) the question, and the answer, and the content, determining (204) a preprompt for a large language model explaining the set of rules, determining (210) a prompt for the large language model instructing the large language model to add at least one rule to the set of rules such that the answer to the question about the content is derivable by automated reasoning on the question, and the content, and the set of rules including the at least one rule, prompting (206) the large language model with the preprompt, prompting (212) the large language model with the prompt, receiving (214) a response of the large language model to the prompt, wherein the response comprises the at least one rule.

2. The method according to claim 1, **characterized in that** the method comprises providing (204) a syntax of a language that is used for the at least one rule, prompting (206) the large language model to determine the at least one rule in accordance with the syntax, checking (216) whether the at least one rule is in accordance with the syntax of the at least one rule, and adding (218) the at least one rule to the set of rules if the at least one rule is in accordance with the syntax of the at least one rule, or not adding the at least one rule to the set of rules otherwise.

3. The method according to one of the preceding claims, **characterized in that** the method comprises automated reasoning (216) on the question, and the content, and the set of rules including the at least one rule to determine an answer, and adding (218) the at least one rule to the set of rules if the answers match, or not adding the at least one rule to the set of rules otherwise.

4. The method according to one of the preceding claims, **characterized in that** the method comprises providing (204) a syntax of the language that is used for the question, in particular an answer set programming syntax, and prompting (206) the large language model to process the question having the syntax of the language.

5. The method according to one of the preceding claims, **characterized in that** the method comprises providing (204) an explanation of the representation of the question that is used for the representation of the question, and prompting (206) the large language model to process the question in accordance with the explanation of the representation of the question.

6. The method according to one of the preceding claims, **characterized in that** the method comprises providing (204) an explanation of a representation of the content that is used for the representation of the content, and prompting (206) the large language model to process the content in accordance with the explanation of the representation of the content.

7. The method according to claim 6, **characterized in that** the representation of the content comprises a scene graph.

8. The method according to one of the preceding claims, **characterized in that** the method comprises providing (204) a syntax of the language that is used for the content, and prompting (206) the large language model to process the content having the syntax of the language that is used for the content.

9. The method according to one of the preceding claims, **characterized in that** the method comprises determining (204) the preprompt for the set of rules comprising the at least one rule, prompting (206) the large language model with the preprompt for the set of rules comprising the at least one rule, determining (208) another prompt comprising a different answer, a different question and/or a different content, determining (210, 212, 214) at least one other rule with the large language model for the other prompt.

10. A device (100) for determining rules for determining an answer to a question about content by automated reasoning on the question, and the content, **characterized in that** the comprises at least one processor (102) and at least one memory (104), wherein the at least one memory (104) stores instructions that, when executed by the at least one processor (102), cause the device (100) to execute the method according to one of the claims 1 to 9.

11. A computer program, **characterized in that** the computer program comprises computer readable instructions that, when executed by a computer, cause the computer to execute the method according to one of the claims 1 to 9.

12. A datastructure for determining rules for determining an answer to a question about content by automated reasoning on the question, and the content, **characterized in that** the datastructure comprises at least one data field for a set of rules for determining the answer to the question, wherein the datastructure comprises at least one data field for the question, and the answer, and the content, wherein the datastructure comprises at least one data field for a preprompt for a large language model explaining the set of rules, wherein the datastructure comprises at least one data field for a prompt for the large language model instructing the large language model to add at least one rule to the set of rules such that the answer to the question about the content is derivable by automated reasoning on the question, and the content, and the set of rules including the at least one rule, wherein the datastructure comprises at least one data field for a response of the large language model to the prompt, received upon prompting the large language model with the preprompt, and prompting the large language model with the prompt, wherein the response comprises the at least one rule.
